# EUROPEAN PATENT APPLICATION

(11) **EP 4 782 376 A1**
(43) Date of publication of application: **29.07.2026**
(21) Application number: 26151454.1
(22) Date of filing: 13.01.2026
(51) Int. Cl.: B65G 54/02, B61B 13/04

(54) **CONVEYOR DEVICE FOR A PACKAGING MACHINE AND PACKAGING MACHINE COMPRISING A CONVEYOR DEVICE**

(30) Priority: 23.01.2025 IT 202500001137
(71) Applicant: Tetra Laval Holdings & Finance S.A., 1009 Pully (CH)
(72) Inventor: COSTANTINI, Davide, 41123 Modena (IT); LOG, Audun Reinsborg, 41123 Modena (IT)
(74) Representative: Tetra Pak Patent Attorneys

(57) **Abstract**

There is described a conveyor device (1) comprising cart assemblies (7) movably coupled to an endless track (6). Each cart assembly (7) comprises a housing seat (15) for housing at least one package (2), a supporting group (16), operatively coupled to the endless track (6) and a holding group (17), carried by the supporting group (16) and carrying, in turn, the housing seat (15). Each supporting group (16) comprises at least one first roller (18) and at least one second roller (19), a first portion (20) carrying the at least one first roller (18), a second portion (21) carrying the at least one second roller (19), a coupling assembly (22) coupling the first portion (20) and the second portion (21) with one another and pushing the first portion (20) and the second portion (21) towards each other with a defined preload and a locking assembly (23) locking the holding group (17) onto the first portion (20) and the second portion (21) such to impede a relative movement between the first portion (20) and the second portion (21).

## Description

### TECHNICAL FIELD

The present invention relates to a conveyor device for a packaging machine configured to form and seal packages containing a pourable product, in particular a pourable food product.

The present invention also relates to a packaging machine configured to form and seal packages containing a pourable product, in particular a pourable food product, and comprising a conveyor device.

### BACKGROUND ART

As is generally known, many pourable food products, such as fruit juice, UHT (ultra-high temperature-treated) milk, wine, tomato sauce, etc., are sold in packages made of a sterilized packaging material.

A typical example is the parallelepiped-shaped package for pourable food products known as Tetra Brik Aseptic (registered trademark), which is made by folding and sealing a laminated web of packaging material.

Such packages are normally produced on fully automatic packaging machines, in which a continuously advancing tube is formed from a continuously advancing web of packaging material.

In particular, the web is folded and sealed longitudinally to form the tube.

In order to complete the forming operations, the tube is filled from above, e.g. by means of a pipe, with the pourable product and is formed, sealed and subsequently cut along equally spaced transversal cross sections.

Pillow packs are obtained thereby, which have a longitudinal sealing band, a top transversal sealing band and a bottom transversal sealing band.

More specifically, each pillow pack usually comprises a prismatic main body, having a longitudinal axis, and a top end portion and a bottom end portion opposite to each other. In detail, the top end portion and the bottom end portion define respective transitions from the main body towards the top sealing band and the bottom sealing band, respectively.

Each pillow pack also comprises two pairs of substantially triangular flaps projecting from opposite sides of the respective top end portion or bottom end portion.

After being formed, sealed and cut, the pillow packs are typically fed to a folding unit configured to perform a final folding operation on the pillow packs, so as to obtain respective finished packages.

A known folding unit comprises an endless conveyor configured to advance the pillow packs along a folding path, from a supply station to a release station. The folding path typically comprises a top straight branch, a bottom straight branch and two opposite curved branches connecting the top straight branch and the bottom straight branch.

Generally, the supply station is arranged at one of the curved branches and the release station is arranged at the bottom straight branch.

Along the folding path, the top end portion and the bottom end portion of each pillow pack are pressed towards each other to form a top end wall and a bottom end wall opposite to each other. At the same time, the triangular flaps of the top end portion are folded outwards onto respective lateral walls of the main body and the triangular flaps of the bottom end portion are folded inwards onto the respective bottom end wall.

After being completely folded by the folding unit, the finished packages are fed to a conveyor device.

Conveyor devices are known, for example from EP-B-2586719, which are arranged in a position under the folding unit, so as to receive the packages exiting from the folding unit through the release station. The conveyor device substantially comprises a conveyor onto which each package is directly released under the action of gravity at an input station. Such input station corresponds to the above-mentioned release station.

More specifically, the conveyor device is configured to advance the packages along an outfeed path from the input station to an output station, at which each package exits the conveyor device.

The packaging machines of the above-mentioned type, along with the relative folding units and conveyor devices, usually operate at high speed.

Due to their elongated shape, the packages released under the gravity action onto the conveyor of the conveyor device may be subject to instability. Moreover, the packages may be subject to friction when advancing on the conveyor of the conveyor device.

These factors can cause the packages to fall while being advanced onto the conveyor, thereby causing production jamming.

Therefore, in EP-B-3566981 the Applicant has already proposed an alternative solution, in which the conveyor device comprises one or more selectively operable cart assemblies, each movably coupled to an endless track and cyclically movable along the endless track. Moreover, each cart assembly comprises:
- a housing seat for housing at least one package at a time during advancement from an input station to an output station; and
- a holding group operatively coupled to the endless track by means of a plurality of rollers so as to be cyclically movable along the endless track and carrying the housing seat.

Additionally, each housing seat is movable with respect to the holding group between:
- an operative position, in which the housing seat is extracted from the holding group and is moved away from the endless track for picking or releasing, in use, the package; and
- an idle position, in which the housing seat is retracted towards the endless track.

Even though such a conveyor device works satisfyingly well, a desire is felt in the sector to further improve the known conveyor devices and/or packaging machines.

### DISCLOSURE OF INVENTION

It is therefore an object of the present invention to provide a conveyor device coming along with facilitated maintenance operations on the cart assemblies.

This object is achieved by a conveyor device as claimed in claim 1.

Preferred embodiments of the conveyor device are claimed in the claims being directly or indirectly dependent on the independent claim 1.

Furthermore, it is another object of the present invention to provide a packaging machine, coming along with facilitated maintenance operations on the conveyor device.

This object is achieved by a packaging machine as claimed in claim 15.

### BRIEF DESCRIPTION OF THE DRAWINGS

A non-limiting embodiment of the present invention will be described by way of example with reference to the accompanying drawings, in which:
Figure 1 is a perspective view, with parts removed for clarity, of a conveyor device according to the present invention;
Figure 2 is a larger-scale side view, with parts removed for clarity, of the conveyor device of Figure 1 while cooperating with a folding unit;
Figure 3 is an enlarged perspective view of a detail of the conveyor device of Figure 1;
Figure 4 is a partially exploded view of the detail of Figure 3, with parts removed for clarity;
Figure 5 is a top perspective view of a portion of the detail of Figure 3, with parts removed for clarity; and
Figure 6 is a partially sectioned lateral view of the portion of Figure 5, with parts removed for clarity.

### BEST MODE FOR CARRYING OUT THE INVENTION

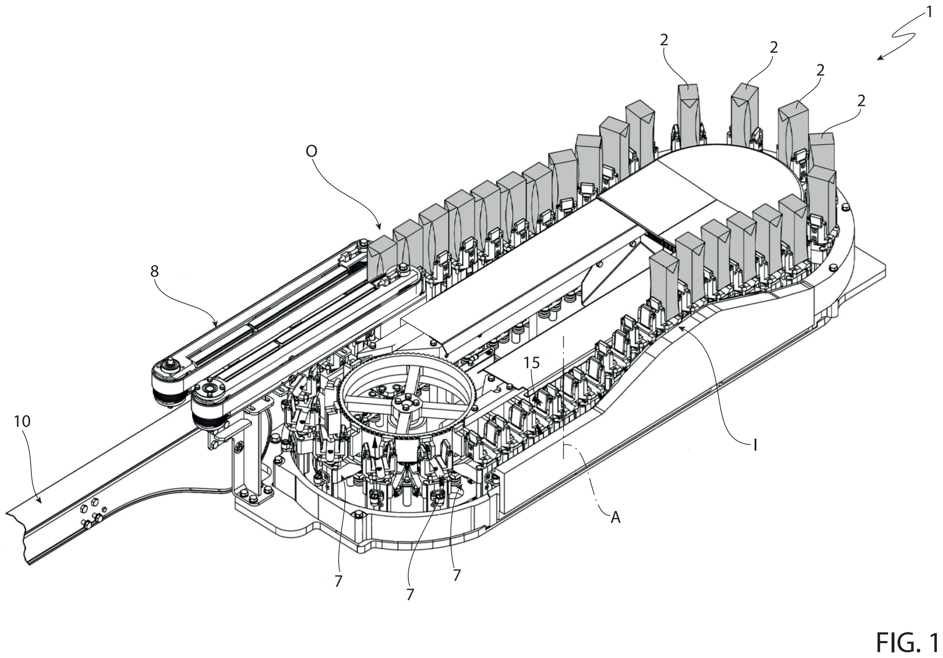

With reference to Figure 1, number 1 indicates as a whole a conveyor device for a packaging machine (known per se and not shown) configured to form and seal a plurality of packages 2 containing a pourable product, in particular a pourable food product such as fruit juice, milk, wine, tomato sauce, etc.

In particular, packages 2 may be obtained from a tube, which is formed in a known manner upstream of conveyor device 1 by longitudinally folding and sealing a web of packaging material (not shown).

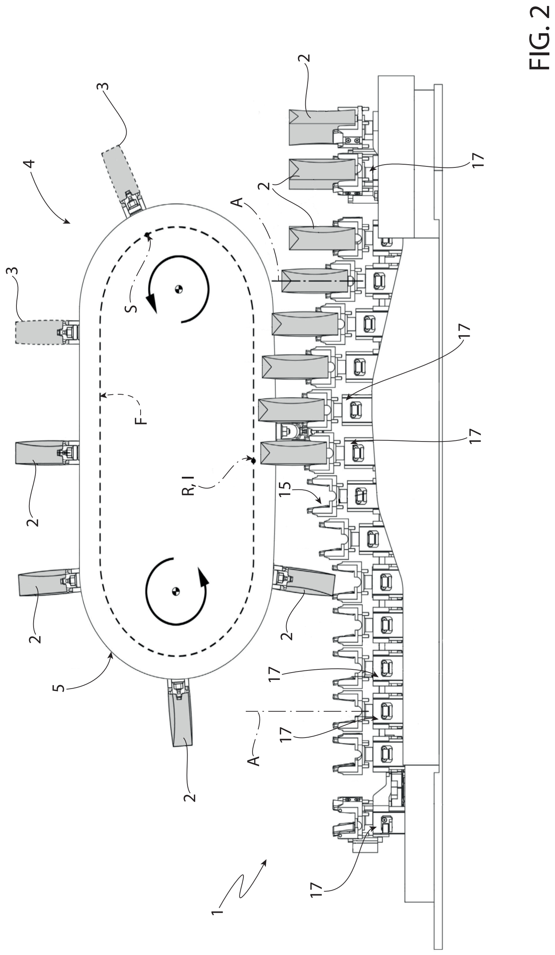

After being formed, the tube is filled with the pourable food product and is fed to a forming unit (not shown and known as such) of the packaging machine. In the forming unit, the tube is sealed and cut along equally spaced cross-sections to form a plurality of semi-finalized packs 3 (in particular pillow packs as schematically shown in Figure 2), which in particular have a longitudinal sealing band, a top transversal sealing band and bottom transversal sealing band.

More specifically, each semi-finalized pack 3 comprises a main body, having a top end portion and bottom end portion opposite to one another.

In more detail, the top end portion and the bottom end portion define respective transitions from the main body towards the respective top sealing band and bottom sealing band.

Each semi-finalized pack 3 also comprises two pairs of substantially triangular flaps projecting from opposite sides of the respective top end portion or bottom end portion.

After being formed, sealed and cut within the forming unit, such semi-finalized packs 3 are fed to a folding unit 4 (schematically shown in Figure 2) configured to perform, according to a known manner not described in detail, a final folding operation on semi-finalized packs 3, so as to obtain respective finished packages 2.

In greater detail, folding unit 4 comprises an endless conveyor 5 configured to advance semi-finalized packs 3 along a folding path F, from a supply station S to a release station R.

Along folding path F, the top end portion and the bottom end portion of each semi-finalized pack 3 are pressed towards each other to form a top end wall and a bottom end wall of package 2 opposite to each other. At the same time, the triangular flaps of the top end portion are folded outwards onto respective lateral walls of the respective main body and the triangular flaps of the bottom end portion are folded inwards onto the respective bottom end wall.

In this way, a plurality of finished packages 2 is obtained. After being completely folded by folding unit 4, packages 2 are fed to conveyor device 1.

As visible in Figures 1 and 2, conveyor device 1 is configured to receive, in use, packages 2 at an input station I and to feed packages 2 to an output station O and to release packages 2 at output station O.

In particular, conveyor device 1 comprises:
- an endless track 6 (only partially shown to the extend necessary for the comprehension of the present invention); and
- one or more selectively operable cart assemblies 7, each movably coupled to endless track 6 and (cyclically) movable along endless track 6.

In particular, conveyor device 1 is configured such that cart assemblies 7 advance, in use, along an advancement path defined by endless track 6.

Advantageously, the advancement path comprises two opposite straight branches and two opposite curved branches connecting the straight branches with one another. In particular, the advancement path is substantially oval-shaped, and more particular extends horizontally.

Advantageously, input station I is located in correspondence of release station R. Preferably, conveyor device 1 is arranged in a position underneath folding unit 4 (Figure 2).

In particular, input station I is arranged in correspondence of one straight branch and output station O is arranged in correspondence of the other straight branch.

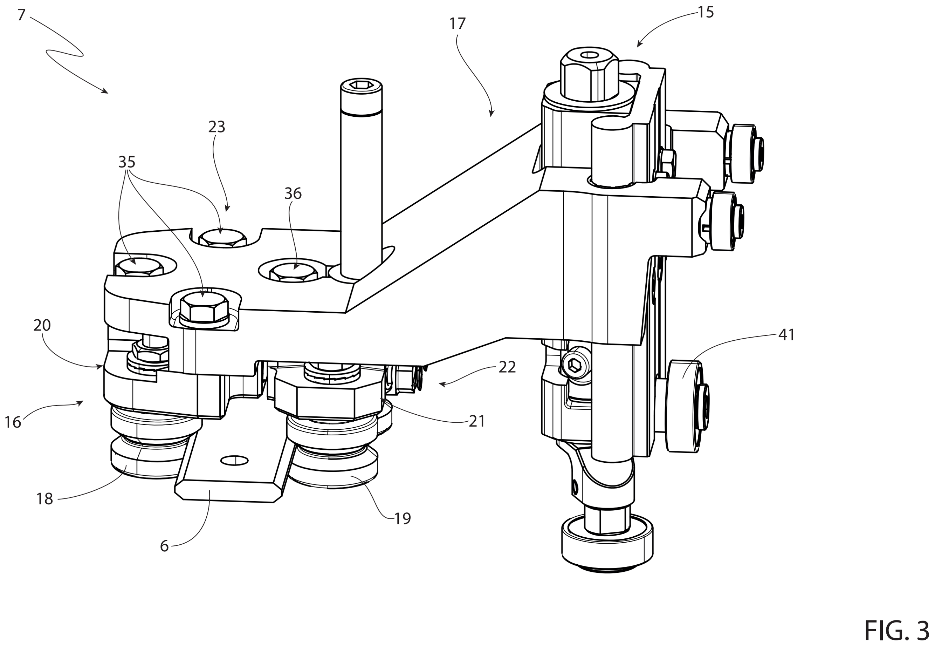

In light of the above, conveyor device 1 is configured to receive packages 2 from folding unit 4 at input station I, convey such packages 2 towards output station O, and release packages 2 to a conveying unit, in particular a belt conveying unit 8. Belt conveying unit 8 is arranged downstream of output station O (Figures 1 and 3) and is configured to convey packages 2 from output station O and feed packages 2 onto an outlet conveyor 10.

With particular reference to Figures 1 to 3, each cart assembly 7 comprises:
- a housing seat 15 for housing at least one, in particular exactly one, package 2 at a time during advancement of cart assembly 7 from input station I to output station O;
- a supporting group 16 operatively coupled to endless track 6 so as to be (cyclically) movable along endless track 6; and
- a holding group 17 mounted to supporting group 16 and carrying, in turn, housing seat 15.

Advantageously, conveying device 1 comprises an actuator group, such as a belt, a linear motor, or the like, configured to advance cart assemblies 7 along endless track 6.

Each supporting group 16 comprises:
- at least one first roller 18 engaging endless track 6 from a first side and at least one second roller 19 engaging endless track 6 from a second side opposite to the first side;
- a first portion 20 carrying the at least one first roller 18;
- a second portion 21 carrying the at least one second roller 19;
- a coupling assembly 22 coupling first portion 20 and second portion 21 with one another and pushing first portion 20 and second portion 21 towards each other with a defined preload; and
- a locking assembly 23 locking holding group 17 onto first portion 20 and second portion 21 such to impede a relative movement between first portion 20 and second portion 21.
In particular, as will be even clearer from the following description, thanks to the fact that first portion 20 and second portion 21 are coupled by means of coupling assembly 22 it is possible to easily mount each cart assembly 7 to endless track 6 with the desired preload. Additionally, once each cart assembly 7 has been mounted to endless track 6, each locking assembly 23 allows to lock the relative position between the respective first portion 20 and the respective second portion 21. Additionally, and as will become more clearer from the further below description, when needing to execute maintenance activities, one only needs to operate locking assembly 23 and coupling assembly 22.

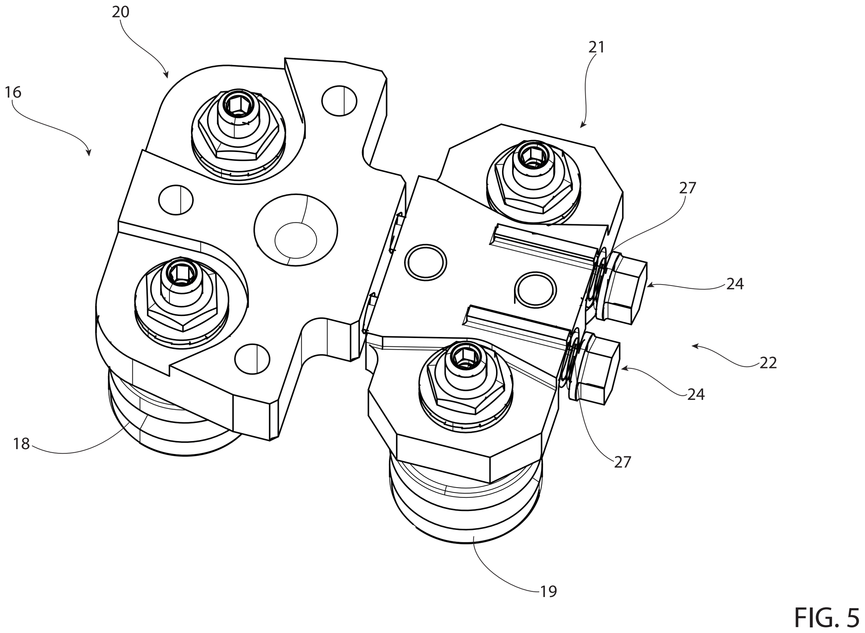

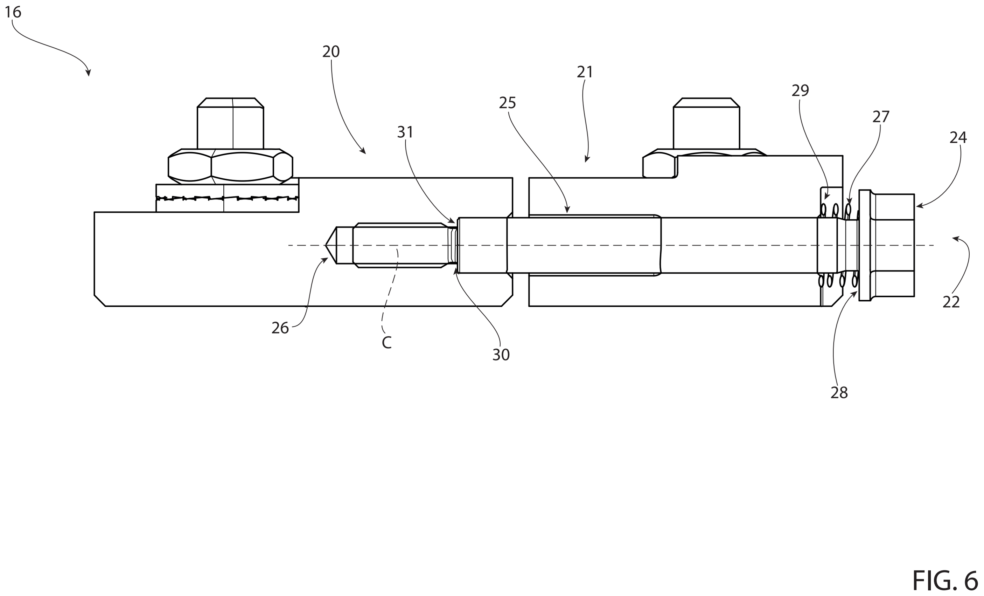

With particular reference to Figures 3 to 6, each coupling assembly 22 comprises:
- one or more coupling elements 24, each extending along an axis C and through a respective through-hole 25 of the respective second portion 21 and into a respective receiving seat 26 of the respective first portion 20; and
- one or more elastic elements 27, in particular a spring, each interacting with one respective coupling element 24 and the respective second portion 21;

More specifically, each elastic element 27 of each coupling assembly 22, when interacting with the respective coupling element 24 and the respective second portion 21, defines, i.e. generates, the respective preload.

Advantageously, the preload of each coupling assembly 22 equals the one of the other coupling assemblies 22.

In further detail, each coupling element 24 comprises a first abutment surface 28 and the respective second portion 21 comprises a second abutment surface 29. Each elastic element 27 engages the respective first abutment surface 28 and the respective second abutment surface 29.

Additionally, each coupling element 24 comprises a first threading (not specifically shown) interacting with a second threading (not specifically shown) of the respective receiving seat 26.

Advantageously, each receiving seat 26 comprises a first engagement surface 30 and each coupling element 24 comprises a second engagement surface 31 configured to abut on first engagement surface 30. In particular, first engagement surface 30 defines an end position of coupling element 24, i.e. when second engagement surface 31 is in contact with first engagement surface 30 coupling element 24 cannot be further forced into the respective receiving seat 26.

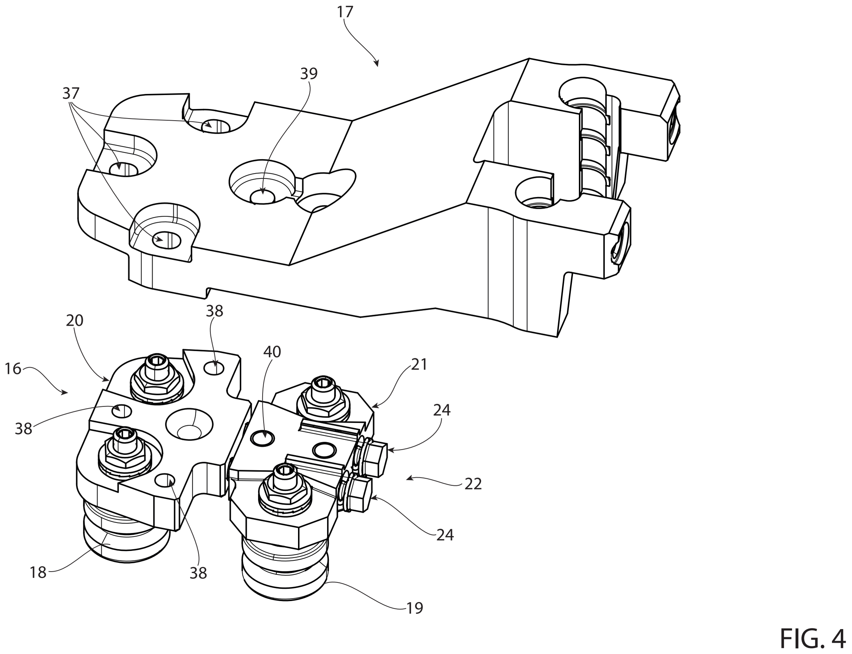

With particular reference to Figures 3 and 4, each locking assembly 23 comprises one or more first elongated locking elements 35 and at least one second elongated locking element 36.

Moreover, each first elongated locking element 35 extends through a respective first through-hole 37 of the respective holding group 17 and into a respective first locking seat 38 of the respective first portion 20.

Additionally, each at least one second elongated locking element 36 extends through a respective second through-hole 39 of the respective holding group 17 and into a respective second locking seat 40 of the respective second portion 21.

Moreover, each first elongated locking element 35 is movable between a locking position in which first elongated locking element 35 is tightened (fastened) and impedes a relative movement between the respective first portion 20 and the respective second portion 21 and an unlocking position in which first elongated locking element 35 is loosened (unfastened) and allows a relative movement between the respective first portion 20 and the respective second portion 21.

In particular, each first elongated locking element 35, when arranged in the locking position, is received within the respective first locking seat 38 and abuts against a surface of holding group 17.

Each first elongated locking element 35 comprises an elongated portion extending through the respective first through-hole 37.

Advantageously, each first through-hole 37 extends along a respective first longitudinal axis and has a first cross-section with respect to a first cross-sectional plane perpendicular to the respective first longitudinal axis.

Additionally, the elongated portion of each first elongated locking element 35 extends along an axis parallel to the respective first longitudinal axis and has a second cross-section with respect to the respective first cross-sectional plane.

In particular, each first cross-section is larger than the respective second cross-section.

When first elongated locking element 35 is in the unlocking position, i.e. first elongated locking element 35 is not fastened and the respective elongated portion is arranged within the respective first through-hole 37, it is possible to induce a relative movement between first elongated locking element 35 and the respective first through-hole 37 along a direction perpendicular to the respective first longitudinal axis.

Additionally, the elongated portion of each first elongated locking element 35 is in contact with only a portion of the respective first through-hole 37, in particular of a surface of holding group 17 delimiting the respective first through-hole 37.

In this way, when needing to execute maintenance works, in particular to restore the defined preload with which first portion 20 and second portion 21 are pushed against one another, it is possible to partially unfasten first elongated locking elements 35 (first elongated locking elements 35 are controlled in the respective unlocking positions) and to temporarily allow a relative moment between first portion 20 and second portion 21, and therefore also a relative movement between first elongated locking element 35 and the respective first through-hole 37 along the above-mentioned direction perpendicular to the respective first longitudinal axis. Afterwards, it is possible to fasten first elongated locking elements 35 again (first elongated locking elements 35 are controlled back to the respective locking positions) for newly impeding a relative movement between first portion 20 and second portion 21. In this way, first portion 20 and second portion 21 are again pushed against one another with the defined preload.

Additionally, in this manner, one avoids dismounting any parts of cart assemblies 7.

More specifically, first cross-sections have an oval shape, and preferentially second cross-sections have a circular shape.

Advantageously, each first elongated locking element 35, in particular the respective elongated portion, comprises a first threading interacting with a second threading of the respective first locking seat 38.

Advantageously, each first elongated locking element 35 comprises an abutment surface arranged opposite to the respective first threading.

Preferentially, the abutment surface of each first elongated locking element 35 abuts, in particular with first elongated locking element 35 being in the locking position, against the respective holding group 17, in particular a respective surface of the respective holding group 17.

Each at least one second elongated locking element 36 comprises an elongated portion extending through the respective second through-hole 39.

Advantageously, each second through-hole 39 extends along a respective second longitudinal axis and has a third cross-section with respect to a second cross-sectional plane perpendicular to the respective second longitudinal axis.

Additionally, the elongated portion of each at least one second elongated locking element 36 extends along the respective second longitudinal axis and has a fourth cross-section with respect to the second sectional plane.

Advantageously, each third cross-section has a size substantially equal to the size of the respective fourth cross-section. In particular, each third cross section and each fourth cross-section are such that each at least one second elongated locking element 36 fits into the respective second through-hole 39 and is in contact with the respective second through-hole 39, in particular with a surface of holding element 17 delimiting the respective second through-hole 39.

In this way, when the at least one second elongated locking element 36 is not fastened and the respective elongated portion is arranged within the respective second through-hole 39, it is not possible to induce a relative movement between the at least one second elongated locking element 36 and the respective second through-hole 39 along a direction perpendicular to the respective second longitudinal axis.

In particular, third cross-sections and fourth cross-sections are circular.

According to the preferred embodiment disclosed and with reference to Figures 1 and 2, each housing seat 15 is movable with respect to the respective supporting group 16 along a respective (vertical) axis A, preferably orthogonal to the advancement path, between:
- an operative position, in which housing seat 15 is extracted from supporting group 16 and is moved away from the advancement path and/or endless track 6 for picking or releasing, in use, package 2; and
- an idle position, in which housing seat 15 is retracted towards supporting group 16.

Conveyor device 1 further comprises an actuator device configured to control the movement of each housing seat 15 between the idle position and the operative position.

As partially shown in Figure 3, the actuator device comprises:
- a cam fixed with respect to endless track 6 and extending parallel, at least in part, to the advancement path and/or endless track 6; and
- at least one cam follower 41 carried by housing seat 15 and configured to cooperate with the cam.

More specifically, the cam comprises an active section, which extends parallel to the advancement path, and two operative sections. In detail, the two operative sections are arranged opposite to one another along corresponding opposite straight branches of the advancement path.

In greater detail, each operative section has a substantially trapezoidal configuration and has, with respect to the direction of movement of cart assemblies 7 along endless track 6: an ascending ramp, inclined with respect to the advancement path, a flat section, extending from the ascending ramp and parallel to the advancement path, and a descending ramp, extending from the flat section and inclined with respect to the advancement path, in particular with an inclination angle opposite to the inclination angle of the ascending ramp.

In light of the above, cam follower 41 is configured to cooperate in contact first with the ascending ramp, then with the flat section and then with the descending ramp of each operative section. Hence, cam follower 13 is subjected to an up-and-down movement along axis A.

Since cam follower 41 is carried by (mounted on) the respective housing seat 15, this up-and-down movement of the respective cam follower 41 causes the respective housing seat 15 to move axially (i.e. vertically) between the idle position and the operative position, hence towards and away from the respective supporting group 16.

According to this non-limiting preferred embodiment, input station I is located along the flat section of the operative section which comes first (first operative section) with respect to the direction of advancement of cart assemblies 7, and output station O is located along the flat section of the operative section which comes second (second operative section) with respect to the direction of advancement of cart assemblies 7.

Preferably, conveyor device 1 further comprises a guide mechanism configured to at least limit oscillation of each housing seat 15 about axis A when housing seat 15 moves between the idle position and the operative position and/or when housing seat 15 is in the operative position.

The operation of conveyor device 1 is described hereinafter with reference to a single cart assembly 7 moving along endless track 6 and advancing a respective housing seat 15, the latter carrying a respective package 2 from input station I to output station O, in particular starting from a condition in which such housing seat 15 is at input station I.

In this condition, housing seat 15 has just received one package 2 from folding unit 4. Furthermore, housing seat 15 is in the operative position.

Hence, the respective cam follower 41 is cooperating with the flat section of the first operative section of the cam with respect to the advancement direction of cart assembly 7.

After housing seat 15 has received (picked) one package 2, housing seat 15 moves towards the idle position, as the respective cam follower 41 cooperates with the descending ramp of the first operative section.

At some point during advancement of cart assembly 7 along the advancement path, the respective cam follower 41 starts to cooperate with the ascending ramp of the second operative section of the cam with respect to the advancement direction of cart assembly 7, so that housing seat 15 moves along axis A from the idle position towards the operative position again.

Once housing seat 15 has reached the operative position, housing seat 15 releases package 2 to belt conveying unit 8, which delivers package 2 to outlet conveyor 10.

The entire operation is repeated cyclically for every cart assembly 7 present in conveyor device 1 and for every package 2 conveyed from input station I to output station O.

When mounting a cart assembly 7 to endless track 6, supporting group 16 and holding group 17 are disconnected. Additionally, the respective first portion 20 and the respective second portion 21 are not firmly locked to one another (i.e. it is possible to induce a relative movement between first portion 20 and second portion 21).

Moreover, the respective first portion 20 and the respective second portion 21 are approached to endless track 6 so that the at least one first roller 18 and the at least one second roller 19 engage endless track 6 from opposite sides thereof.

Afterwards, the respective coupling assembly 22 is used to couple the respective first portion 20 and the respective second portion 21 with one another thereby applying the defined preload.

In more detail, each coupling elements 24 is guided through the respective through-hole 25 and into the respective receiving seat 26. In particular, each second engagement surface 31 is put into engagement with the respective first engagement surface 30.

Additionally, each elastic element 27 interacts with the respective coupling element 24 and the respective second portion 21 so that coupling assembly 22 exerts the defined preload.

Moreover, the respective holding group 17 is connected to supporting group 16 and the respective locking assembly 23 is used to mount holding group 17 to the respective first portion 20 and the respective second portion 21.

In particular, each first elongated locking element 35 is set in the respective locking position. Additionally, also the respective at least one second elongated locking element 36 is fastened.

When needing to readjust a cart assembly 7 (e.g. restore the defined preload after a certain number of hours of use), it is possible to simply set first elongated locking elements 35 in the unlocking position so as to allow a relative movement between first portion 20 and second portion 21 and to newly set first elongated locking elements 35 in the locking positions.

The advantages of conveyor device 1 according to the present invention will be clear from the foregoing description.

In particular, cart assemblies 7 can be easily mounted to endless track 6 thank to having first portion 20, second portions 21, coupling assemblies 22 and locking assemblies 23.

Additionally, maintenance of cart assemblies 7 is simple as it is only necessary to operate first elongated locking elements 35.

Clearly, changes may be made to conveyor device 1 and/or the packaging machine as described herein without, however, departing from the scope of protection as defined in the accompanying claims.

## Claims

1. Conveyor device (1) for a packaging machine configured to form and seal packages (2) containing a pourable product;
wherein the conveyor device (1) is configured to receive, in use, the packages (2) at an input station (I), to feed the packages (2) to an output station (O) and to release the packages (2) at the output station (O);
wherein the conveyor device (1) comprises one or more selectively operable cart assemblies (7), each cart assembly (7) being movably coupled to an endless track (6) of the conveyor device (1) and movable along the endless track (6);
wherein each cart assembly (7) comprises:
- a housing seat (15) for housing at least one package (2) during advancement from the input station (I) to the output station (O);
- a supporting group (16), operatively coupled to the endless track (6) so as to be movable along the endless track (6); and
- a holding group (17), carried by the supporting group (16) and carrying, in turn, the housing seat (15);
wherein each supporting group (16) comprises:
- at least one first roller (18) engaging the endless track (6) from a first side and at least one second roller (19) engaging the endless track (6) from a second side opposite to the first side;
- a first portion (20) carrying the at least one first roller (18);
- a second portion (21) carrying the at least one second roller (19);
- a coupling assembly (22) coupling the first portion (20) and the second portion (21) with one another and pushing the first portion (20) and the second portion (21) towards each other with a defined preload; and
- a locking assembly (23) locking the holding group (17) onto the first portion (20) and the second portion (21) such to impede a relative movement between the first portion (20) and the second portion (21).

2. Conveyor device according to claim 1, wherein each coupling assembly (22) comprises:
- one or more coupling elements (24), each extending along an axis (C) and through a respective through-hole (25) of the respective second portion (21) and into a respective receiving seat (26) of the respective first portion (20); and
- one or more elastic elements (27), each interacting with one respective coupling element (24) and the respective second portion (21);
wherein each elastic elements (27) of each coupling assembly (22), when interacting with the respective coupling element 24 and the respective second portion 21, generate the respective preload.

3. Conveyor device according to claim 2, wherein each coupling element (24) comprises a first abutment surface (28) and the respective second portion (21) comprises a second abutment surface (29);
wherein each elastic element (27) engages the respective first abutment surface (28) and the respective second abutment surface (29).

4. Conveyor device according to claim 2 or 3, wherein each coupling element (24) comprises a first threading interacting with a second threading of the respective receiving seat (26).

5. Conveyor device according to any one of claims 2 to 4, wherein each receiving seat (26) comprises a first engagement surface (30) and each coupling element (25) comprises a second engagement surface (31) being in contact with the first engagement surface (30).

6. Conveyor device according to any one of the preceding claims, wherein each locking assembly (23) comprises one or more first elongated locking elements (35) and at least one second elongated locking element (36);
wherein each first elongated locking element (35) extends through a respective first through-hole (37) of the respective holding group (17) and into a respective first locking seat (38) of the respective first portion (20);
wherein each at least one second elongated locking element (36) extends through a respective second through-hole (39) of the respective holding group (17) and into a respective second locking seat (40) of the respective second portion (21).

7. Conveyor device according to claim 6, wherein each first elongated locking element (35) comprises an elongated portion extending within the respective first through-hole (37);
wherein each first through-hole (37) extends along a first longitudinal axis and has a first cross-section with respect to a first cross-sectional plane perpendicular to the first longitudinal axis;
wherein the elongated portion of each first elongated locking element (35) extends along an axis parallel to the respective first longitudinal axis and has a second cross-section with respect to the first cross-sectional plane;
wherein each first cross-section is larger than the respective second cross-section.

8. Conveyor device according to claim 7, wherein each first cross-section has an oval shape.

9. Conveyor device according to claim 8, wherein each second cross-section has a circular shape.

10. Conveyor device according to any one of claims 6 to 9, wherein each first elongated locking element (35) comprises a first threading interacting with a second threading of the respective first locking seat (38);
wherein each first elongated locking element (35) comprises an abutment surface arranged opposite to the respective first threading;
wherein the respective abutment surface abuts against a surface of the respective holding group (17).

11. Conveyor device according to any one of claims 6 to 10, wherein each at least one second elongated locking element (36) comprises an elongated portion extending within the respective second through-hole (39);
wherein each second through-hole (39) extends along a second longitudinal axis and has a third cross-section with respect to a second cross-sectional plane perpendicular to the respective second longitudinal axis;
wherein each elongated portion of each at least one second elongated locking element (36) extends along the respective second longitudinal axis and has a fourth cross-section with respect to the second cross-sectional plane;
wherein each third cross-section has a size substantially equal to the size of the respective fourth cross-section.

12. Conveyor device according to claim 11, wherein each first cross-section and each second cross-section have a circular shape.

13. Conveyor device according to any one of the preceding claims, wherein each housing seat (15) is movable with respect to the respective holding group (17) along a respective axis (A) transversal to an advancement path defined by the endless track (6) between:
- an operative position, in which the housing seat (15) is extracted from the respective supporting group (16) and is moved away from the advancement path for picking or releasing, in use, the package (2); and
- an idle position, in which the housing seat (15) is retracted towards the advancement path.

14. Conveyor device according to claim 13, and further comprising an actuator device configured to control the movement of the housing seats (15) between the respective idle positions and the respective operative positions.

15. A packaging machine configured to form and seal a plurality of packages (2) containing a pourable product;
the packaging machine comprises:
- a folding unit configured for receiving a plurality of semi-finalized packs (3) and for folding the semi-finalized packs (3) into the packages (2); and
- a conveyor device (1) according to any one of the preceding claims and being configured to receive the packages (2) from the folding device (3) at the input station (I) and to release the packages (2) to an outlet conveyor at the output station (O).
